(19) **Europäisches Patentamt**

**European Patent Office**

**Office européen des brevets**

(11) **EP 1 148 629 B1**

## (12) EUROPÄISCHE PATENTSCHRIFT

(45) Veröffentlichungstag und Bekanntmachung des Hinweises auf die Patenterteilung:
**11.02.2004 Patentblatt 2004/07**

(51) Int Cl.$^7$: **H02M 7/525**, H02M 7/48

(21) Anmeldenummer: **01106236.1**

(22) Anmeldetag: **14.03.2001**

(54) **Steuerverfahren für einen pulsweitengesteuerten Umrichter und Steuervorrichtung zur Durchführung dieses Steuerverfahrens**

Control method for pulse width driven inverter and control apparatus for carrying out this control method

Procédé de côntrol d'un invertisseur de modulation de largeur d'impulsion et dispositif pour mettre mise on oeuvre ce procédé

(84) Benannte Vertragsstaaten:
**AT BE CH CY DE DK ES FI FR GB GR IE IT LI LU MC NL PT SE TR**

(30) Priorität: **18.04.2000 DE 10019374**

(43) Veröffentlichungstag der Anmeldung:
**24.10.2001 Patentblatt 2001/43**

(73) Patentinhaber: **Sew-Eurodrive GmbH & Co. KG 76646 Bruchsal (DE)**

(72) Erfinder:
- **Wolf, Harald 76694 Forst (DE)**
- **Hammel, Wolfgang 76646 Bruchsal (DE)**

(56) Entgegenhaltungen:
**DE-A- 2 705 343          DE-A- 4 434 342**

**Beschreibung**

Die Erfindung betrifft ein Steuerverfahren für einen pulsweitengesteuerten Umrichter und eine Steuervorrichtung zur Durchführung dieses Steuerverfahrens.

Bei pulsweitengesteuerten Umrichtern, die mit hoher Schaltfrequenz betrieben werden, entstehen in deren Leistungshalbleiterschalter sehr hohe Schaltverlustleistungen, die die erreichbare Umrichterausgangsleistung im Vergleich zum Betrieb mit niedriger Schaltfrequenz erheblich reduziert. Umrichtergespeiste Motorantriebe, die einen geräuscharmen bzw. geräuschfreien Betrieb erfordern, werden mit Schaltfrequenzen von 16 kHz und darüber betrieben.

Aus der OS 27 05 343 ist ein Steuerverfahren für einen selbstgeführten, pulsgesteuerten Umrichter bekannt, das zur Klasse der Flattop-Verfahren zählt. Vorteil dieses Verfahrens ist die Reduktion der Schaltverluste der Leistungshalbleiterschalter. Bei diesem Verfahren führen immer nur zu jeweils zwei Ausgangsphasen gehörige Leistungsschalter Schalthandlungen aus, während die zur dritten Phase gehörigen Leistungshalbleiterschalter nur einen der zwei möglichen Schaltzustände annehmen. Erreicht wird dies, indem auf ein Soll-Spannungssystem ($U_{R,soll}$, $U_{S,soll}$, $U_{T,soll}$) ein sogenanntes maximales Nullspannungssystem ($U_{0,MAX}$ ,$U_{0,MAX}$ , $U_{0,MAX}$) oder ein sogenanntes minimales Nullspannungssystem ($U_{0,MIN}$ , $U_{0,MIN}$ , $U_{0,MIN}$) addiert wird, wobei $U_{0,MAX}$= $U_Z/2$ - max($U_{R,soll}$, $U_{S,soll}$, $U_{T,soll}$) und $U_{0,MIN}$=- $U_Z/2$ - min($U_{R,soll}$, $U_{S,soll}$, $U_{T,soll}$) ist und $U_Z$ die Zwischenkreisspannung bezeichnet. Das resultierende Spannungssystem wird einem Pulsweitenmodulator zur Erzeugung von Schaltsignalen für die Leistungshalbleiterschalter zugeführt. Dabei sind alle Spannungen bezogen auf den Mittelabgriff der Gleichspannungsquelle $U_Z$ angegeben.

Der 360°-Winkelbereich des Ausgangsspannungszeigers wird dabei in Bereiche mit maximalem Nullspannungssystem ($U_{0,MAX}$,$U_{0,MAX}$, $U_{0,MAX}$) und minimalem Nullspannungssystem ($U_{0,MIN}$ , $U_{0,MIN}$ , $U_{0,MIN}$) aufgeteilt. Derartige Steuerverfahren werden auch als Flattop-Verfahren bezeichnet, weil jeweils in einem Phasenpotential Winkelbereiche mit entweder konstanter maximaler Spannung, also +$U_Z/2$, oder mit konstanter minimaler Spannung, also -$U_Z/2$, auftreten. Bei einer Ausdehnung der genannten Winkelbereiche über 30°, 60° oder 120° wird das zugehörige Steuerverfahren als 30°-Flattop-Verfahren, 60°-Flattop-Verfahren oder 120°Flattop-Verfahren bezeichnet.

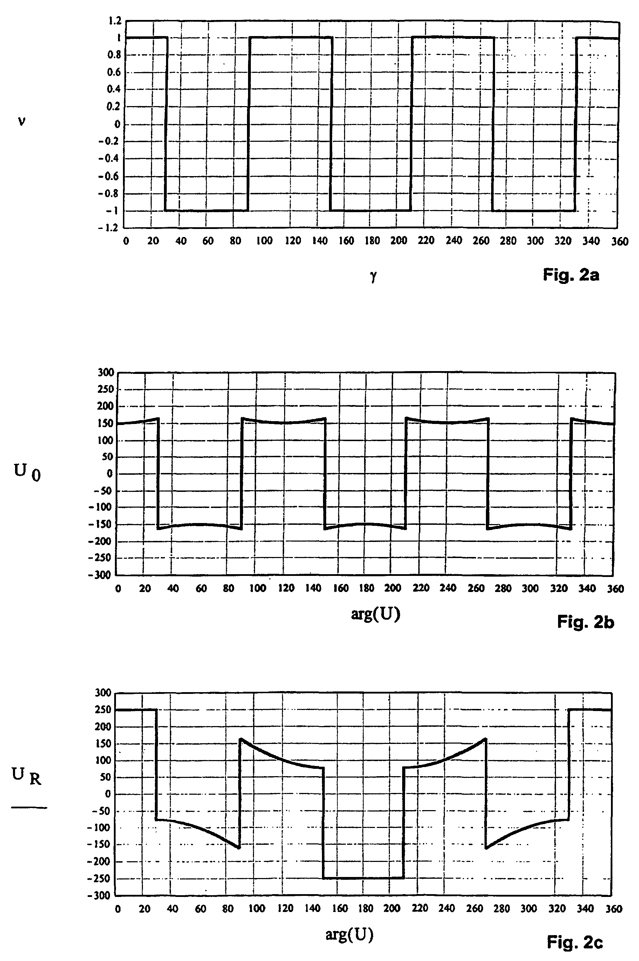

In der Figur 2 der OS 27 05 343 ist der Winkelbereich maximaler Nullspannungskomponente über 60° ausgedehnt. An diesen Winkelbereich schließt sich ein weiterer 60° Winkelbereich direkt an mit minimaler Nullspannungskomponente. In der Figur 2 weist der Verlauf sowohl der gezeigten Phasenspannung als auch des zugehörigen Nullspannungssystems Sprungstellen auf.

Der Verschiebungswinkel a in Figur 2 der OS 27 05 343 und zugehöriger Beschreibung ist auf 60° begrenzt. Es liegt dann ein 60°-Flattop-Verfahren vor, weil in den einzelnen Phasenpotentialen die Winkelbereiche mit maximaler bzw. minimaler Spannung sich über 60° ausdehnen. Wenn der Verschiebungswinkel a nicht auf den Bereich von 0° bis 60° begrenzt würde, entstünde ein unsymmtrisches Flattop-Verfahren, das kein 60°-Flattop-Verfahren ist, obwohl die Winkelbereiche mit maximalem bzw. minimalem Nullsystem sich unverändert über 60° ausdehnen.

Nachteilig ist beim Einsatz der genannten Verfahren, dass Sprungstellen im Nullspannungssystem Knackgeräusche erzeugen, die bei schneller Abfolge ein Summen bzw. Piepsen des Motors verursachen. Diese Geräusche können auch nicht durch Wahl einer Schaltfrequenz von 16kHz oder höher beseitigt werden.

Bei Vollaussteuerung verschwinden bei manchen Flattop-Verfahren die Knackgeräusche, da Sprungstellen im Nullspannungssystem verschwinden, insbesondere bei einem jeweils zum Maximum oder Minimum einer Phase der Sollspannung symmetrisch angeordneten Winkelbereichen des 30°-Flattop-Verfahrens oder 60°-Flattop-Verfahrens.

Beim 120° Flattop-Verfahren weist die Nullspannungskomponente keine Sprungstellen auf. Von Nachteil ist jedoch, dass bei diesem Verfahren keine gleichmäßige Belastung der unteren und oberen Leistungshalbleiter auftritt. Außerdem ist die Verfälschung der Ausgangsspannung infolge der Totzeit und Durchlassspannung der Schaltelemente bei positiver und negativer Halbperiode der Ausgangsspannungen unterschiedlich.

Aus der DE 44 34 342 A1 ist ein Steuerverfahren und eine Vorrichtung zur Reduzierung von Durchlassspitzenwertverlusten in Leistungshalbleiterschaltern bekannt. Hierbei wird auf ein Soll-Spannungssystem ein Nullspannungssystem addiert und einem Pulsweitenmodulator zur Erzeugung von Schaltsignalen für die Leistungshalbleiterschalter zugeführt. Flattop-Verfahren werden in dieser Schrift nicht verwendet. Es wird lediglich ein sinus- oder dreieckförmiges Nullspannungssystem aufaddiert. Nachteilig ist dabei jedoch, dass dort keine Reduzierung der Schaltverluste erreicht wird, was auch nicht Aufgabe der dortigen Schrift ist.

Der Erfindung liegt die Aufgabe zugrunde, ein Steuerverfahren für einen pulsweitengesteuerten Umrichter und eine Steuervorrichtung zur Durchführung dieses Steuerverfahrens weiterzubilden, wobei Schaltverluste in den steuerbaren Leistungshalbleiter-Schaltern eines pulsdauermodulierten Umrichters reduziert sind, ohne dass eine unerwünschte Geräuschbildung auftritt. Außerdem soll die Lösung kostengünstig sein.

Diese Aufgabe wird erfindungsgemäß mit den Merkmalen nach Anspruch 1 bei dem Steuerverfahren für einen pulsweitengesteuerten Umrichter und bei der Steuervorrichtung zur Durchführung dieses Steuerverfahrens mit den Merkmalen nach Anspruch 15 gelöst.

Wesentliche Merkmale der Erfindung bei dem Steuerverfahren für einen pulsweitengesteuerten Umrichter mit steuerbaren Leistungshalbleiterschaltern zur Reduzierung von Schaltverlusten unter Vermeidung von Geräuschbildung sind, dass aus einem Spannungsraumzeiger, umfassend Betrag $|U|$ und Winkel $\arg(U)$, ein Soll-Spannungssystem ($U_{R,soll}$, $U_{S,soll}$, $U_{T,soll}$) gebildet wird, und dass ein Nullspannungssystem ($U_0$, $U_0$, $U_0$) aus dem Soll-Spannungssystem ($U_{R,soll}$, $U_{S,soll}$, $U_{T,soll}$), dem Winkel $\arg(U)$ und einem Steuerwinkel $\varphi$ gebildet wird, und wobei das aus der Summe von Nullspannungssystem ($U_0$, $U_0$, $U_0$) und Soll-Spannungssystem ($U_{R,soll}$, $U_{S,soll}$, $U_{T,soll}$) resultierende Spannungssystem ($U_R$, $U_S$, $U_T$) einem Pulsweitenmodulator 2 zur Bildung der Steuersignale ($S_R$, $S_S$, $S_T$) für die Leistungshalbleiterschalter des Umrichters zugeführt wird, wobei der 360°-Winkelbereich des Sollspannungszeigers ($U_{R,soll}$, $U_{S,soll}$, $U_{T,soll}$) zusammengesetzt wird aus

- ■ ersten Winkelbereichen, bei denen ein maximales Nullspannungssystem ($U_{0,MAX}$, $U_{0,MAX}$, $U_{0,MAX}$) aufsummiert wird,
- ■ zweiten Winkelbereichen, bei denen ein minimales Nullspannungssystem ($U_{0,MIN}$, $U_{0,MIN}$, $U_{0,MIN}$) aufsummiert wird und
- ■ dritten Winkelbereichen, bei denen ein zwischen minimalem und maximalem Nullspannungssystem liegendes Nullspannungssystem aufsummiert wird,

und wobei die ersten und die zweiten stets nur dritte Winkelbereiche zum Nachbarn haben.

Durch Aufsummieren des maximalen Nullspannungssystem befindet sich die größte Spannung des resultierenden Spannungssystems ($U_R$, $U_S$, $U_T$) an der oberen Aussteuergrenze oder oberen Modulationsgrenze des Pulsweitenmodulators, aber nicht darüber; d.h. am Ausgang des Pulsweitenmodulators resultiert dann gerade ein Dauer-Ein-Zustand für das zur größten Spannung, beispielsweise $U_R$, zugehörige Steuersignal, also im Beispiel $S_R$. Das maximale Nullspannungssystem ist also derart maximal, dass sich zwar mindestens die größte Spannung an der Aussteuergrenze befindet, aber eine Übersteuerung und somit eine Verfälschung der Motor-Dreieckspannungen *($U_R$ - $U_S$, $U_S$ - $U_T$, $U_T$ - $U_R$)* vermieden ist.

Durch Aufsummieren des minimalen Nullspannungssystem befindet sich die kleinste Spannung des resultierenden Spannungssystems ($U_R$, $U_S$, $U_T$) an der unteren Aussteuergrenze oder unteren Modulationsgrenze des Pulsweitenmodulators, aber nicht darunter; d.h. am Ausgang des Pulsweitenmodulators resultiert dann gerade ein Dauer-Aus-Zustand für das zur kleinsten Spannung zugehörige Steuersignal. Das minimale Nullspannungssystem ist also derart minimal, dass sich zwar mindestens die kleinste Spannung an der unteren Aussteuergrenze befindet, aber eine Unterschreitung dieser Aussteuergrenze, also betragsmäßige Übersteuerung, und somit eine Verfälschung der Motor-Dreieckspannungen vermieden ist.

Beim maximalen oder minimalen Nullspannungssystem handelt es sich dabei um eine zeitlich veränderliche Größe, die vom jeweiligen Soll-Spannungssystem ($U_{R,soll}$, $U_{S,soll}$, $U_{T,soll}$) abhängt, insbesondere für jede Pulsweitenmodulationsperiode jeweils zu bestimmen ist.

Von Vorteil ist bei der Erfindung, dass kein direkter Übergang von ersten zu zweiten Winkelbereichen vorliegt und damit auch kein Sprung vom minimalem zum maximalen Nullspannungssystem oder umgekehrt vorliegt, wodurch kein Knackgeräusch, Summen oder anderes Geräusch entsteht. Außerdem ist das Verhalten des Nullspannungssystems in den dritten Winkelbereichen derart wählbar, dass die Spannungsänderung pro Zeit immer unter einem kritischen Wert bleibt, ab dem eine hörbare Geräuschbildung oder eine störende Geräuschbildung auftritt. Außerdem ist die Lösung kostengünstig als Software realisierbar. Darüber hinaus werden Schaltverluste in den steuerbaren Leistungshalbleiter-Schaltern eines pulsdauermodulierten Umrichters reduziert, ohne dass eine unerwünschte Geräuschbildung auftritt.

Bei einer vorteilhaften Ausgestaltung stellen die dritten Winkelbereiche einen quasistetigen Übergang von minimalem zum maximalem Nullspannungssystem und/oder umgekehrt dar. Von Vorteil ist dabei, dass keine Sprünge auftreten, mit Ausnahme der diskreten Spannungswerte bei einer zeitdiskreten Realisierung des Steuerverfahrens. Aufeinander folgende diskrete Spannungswerte weisen also in diesem Fall keine Differenzen auf, die den kritischen Wert für Spannungsänderung pro Zeitschritt überschreiten.

Bei einer vorteilhaften Ausgestaltung nimmt die Spannung $U_0$ des Nullspannungssystems ($U_0$, $U_0$, $U_0$) in den dritten Winkelbereichen diskrete Werte an, wobei zumindest die maximale Differenz als Kennwert zweier zeitlich aufeinander folgender Werte vorgebbar ist. Von Vorteil ist dabei, dass die maximale Differenz so klein wählbar ist, dass keine wesentliche Geräuschbildung auftritt.

Bei einer weiteren vorteilhaften Ausgestaltung dehnen sich die dritten Winkelbereiche jeweils über mindestens 3° und/oder maximal 30° aus. Besonders vorteilhaft ist eine Ausdehnung der dritten Winkelbereiche jeweils über 10°. Von Vorteil ist dabei, dass dabei ein Optimum unter Berücksichtigung der Reduzierung der Schaltverluste und der Reduzierung der Geräuschbildung gegeben ist.

Bei einer weiteren vorteilhaften Ausgestaltung wird der Steuerwinkel $\varphi$ von einer übergeordneten, strom- oder spannungsgeführten Steuerung vorgegeben. Von Vorteil ist dabei, dass er je nach Betriebszustand einstellbar ist.

Bei einer weiteren vorteilhaften Ausgestaltung wird der Steuerwinkel $\varphi$ konstant vorgegeben. Von Vorteil ist dabei, dass der Rechenaufwand stark reduziert ist.

Bei einer weiteren vorteilhaften Ausgestaltung wird der Steuerwinkel φ als Funktion des Betriebszustands, wie motorischer oder generatorischer Betrieb, des Umrichters vorgegeben. Bei einer weiteren vorteilhaften Ausgestaltung ist der Steuerwinkel φ eine Funktion des Winkels zwischen Strom-Raumzeiger und Spannungs-Raumzeiger. Von Vorteil ist dabei, dass ein optimaler Steuerwinkel in einfacher Weise bestimmbar ist. Außerdem ist für jeden Betriebszustand ein optimaler Steuerwinkel verwendbar.

Bei einer weiteren vorteilhaften Ausgestaltung weist die Funktion oder Funktionstabelle

■ erste Winkelbereiche, bei denen ein maximales Nullspannungssystem ($U_{0,MAX}$, $U_{0,MAX}$, $U_{0,MAX}$) aufsummiert wird,

■ zweite Winkelbereiche, bei denen ein minimales Nullspannungssystem ($U_{0,MIN}$, $U_{0,MIN}$, $U_{0,MIN}$) aufsummiert wird und

■ dritte Winkelbereiche, bei denen ein zwischen minimalem und maximalem Nullspannungssystem liegendes Nullspannungssystem aufsummiert wird,

auf und die ersten und die zweiten haben stets nur dritte Winkelbereiche zum Nachbarn. Von Vorteil ist dabei, dass bei genügend schnellem zeitlichen Abtasten oder Auslesen von Werten zur Bildung der Nullspannung Zwischenwerte zwischen maximaler Nullspannung $U_{0,MAX}$ und minimaler Nullspannung $U_{0,MIN}$ verwendbar sind.

Bei einer weiteren vorteilhaften Ausgestaltung wird im Rechenwerk 7 die Spannung $U_0$ zur Bildung des Nullspannungssystems nach der Formel

$$U_0 = \frac{1}{2}\left[(v+1)\cdot\left(\frac{U_Z}{2} - Max\left(U_{R,soll}, U_{S,soll}, U_{T,soll}\right)\right) - (v-1)\cdot\left(\frac{-U_Z}{2} - Min\left(U_{R,soll}, U_{S,soll}, U_{T,soll}\right)\right)\right]$$

bestimmt, wobei $U_Z$ die Zwischenkreisspannung des Umrichters darstellt. Von Vorteil ist dabei, dass somit mittels einer einfachen Formel in kostengünstiger Weise eine geschlossene Lösung zur Bildung des Nullspannungssystems verwendbar ist.

Wesentliche Merkmale der Erfindung bei der Steuervorrichtung zur Durchführung eines Steuerverfahrens sind, dass die Steuervorrichtung von einem pulsweitengesteuerten Umrichter mit steuerbaren Leistungshalbleiterschaltern umfasst wird, und dass ein Funktionsgenerator 1 aus einem Spannungsraumzeiger, umfassend Betrag |U| und Winkel arg(U), ein Soll-Spannungssystem ($U_{R,soll}$, $U_{S,soll}$, $U_{T,soll}$) bildet, und dass ein Rechenwerk 7 zusammen mit einem Funktionsspeicher 8 ein Nullspannungssystem ($U_0$, $U_0$, $U_0$) aus dem Soll-Spannungssystem ($U_{R,soll}$, $U_{S,soll}$, $U_{T,soll}$), dem Winkel arg(U) und einem Steuerwinkel φ bildet, und dass ein Pulsweitenmodulator 2 aus der Summe von Nullspannungssystem ($U_0$, $U_0$, $U_0$) und Soll-Spannungssystem ($U_{R,soll}$, $U_{S,soll}$, $U_{T,soll}$) Schaltsignale für Leistungshalbleiterschalter bildet.

Von Vorteil ist dabei, dass durch Verwendung der beschriebenen Steuerverfahren kein direkter Übergang von ersten zu zweiten Winkelbereichen vorliegt und damit auch kein Sprung vom minimalem zum maximalen Nullspannungssystem oder umgekehrt vorliegt, wodurch kein Knackgeräusch, Summen oder anderes Geräusch entsteht. Außerdem ist das Verhalten des Nullspannungssystems in den dritten Winkelbereichen derart wählbar, dass die Spannungsänderung pro Zeit immer unter einem kritischen Wert bleibt, ab dem eine hörbare Geräuschbildung oder eine störende Geräuschbildung auftritt. Außerdem ist die Lösung kostengünstig als Software realisierbar. Darüber hinaus werden Schaltverluste in den steuerbaren Leistungshalbleiter-Schaltern eines pulsdauermodulierten Umrichters reduziert, ohne dass eine unerwünschte Geräuschbildung auftritt. Zusätzlich wird auch eine sonst bekannte Vorrichtung nur um die erfindungsgemäß notwendigen Mittel zur Bildung des Rechenwerks und Funktionsspeichers erweitert.

Bei einer weiteren vorteilhaften Ausgestaltung weist das Rechenwerk mindestens einen Minimalwertbildner und mindestens einen Maximalwertbildner auf. Bei einer weiteren vorteilhaften Ausgestaltung wird der Ausgangswert des Funktionsspeichers im Rechenwerk einem ersten und einem zweiten Addierer zugeführt. Bei einer weiteren vorteilhaften Ausgestaltung sind die Addierer derart gestaltet, dass für den Ausgangswert des ersten Addierers auf den Ausgangswert des Funktionsspeichers ein positiver Wert, wie 1 oder dergleichen, addiert wird und dass für den Ausgangswert des zweiten Addierers auf den Ausgangswert des Funktionsspeichers ein negativer Wert, wie -1 oder dergleichen, addiert wird und dass die Ausgangswerte der Addierer jeweils einem ersten und zweiten Multiplizierer zugeführt werden, wobei dem ersten Multiplizierer auch $U_Z/2$, vermindert um den Ausgangswert des Maximalwertbildners, zugeführt wird und wobei dem zweiten Multiplizierer auch $-U_Z/2$, vermindert um den Ausgangswert des Minimalwertbildners, zugeführt wird, und dass die Ausgangswerte der Multiplizierer einem Subtrahierer zugeführt werden und der Ausgang dieses Subtrahierers einem Multiplizierer oder einem Proportionalglied zur Bildung der Spannung $U_0$ zugeführt wird. Von Vorteil ist dabei, dass Standardmittel verwendet werden.

Weitere vorteilhafte erfindungsgemäße Ausgestaltungen ergeben sich aus den Unteransprüchen.

**Bezugszeichenliste**

1    Funktionsgenerator
2    Pulsweitenmodulator
3    Minimalwertbildner
4    Maximalwertbildner
5    Funktionsgenerator für Dreieckspannung
6    Komparator
7    Rechenwerk
8    Funktionsspeicher

Die Erfindung wird nun anhand von Abbildungen näher erläutert:

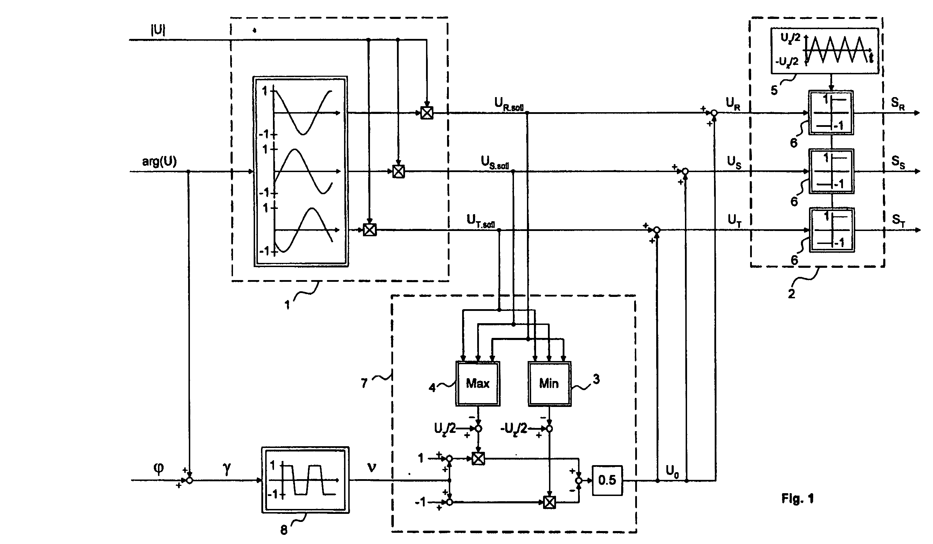

In der Figur 1 ist ein Blockdiagramm der erfindungsgemäßen Steuervorrichtung und des Steuerverfahrens dargestellt.

In der Figur 2a ist eine Sprünge aufweisende Wertetabelle des Funktionsspeichers 8 gezeigt, in der Figur 2b ist der zu Figur 2a gehörige Verlauf des Nullspannungssystems $(U_0, U_0, U_0)$ gezeigt, wobei die Sollspannung einen kleinen Betrag hat. In der Figur 2c ist der daraus sich ergebende Spannungsverlauf der Phase R des resultierenden Spannungssystems gezeigt.

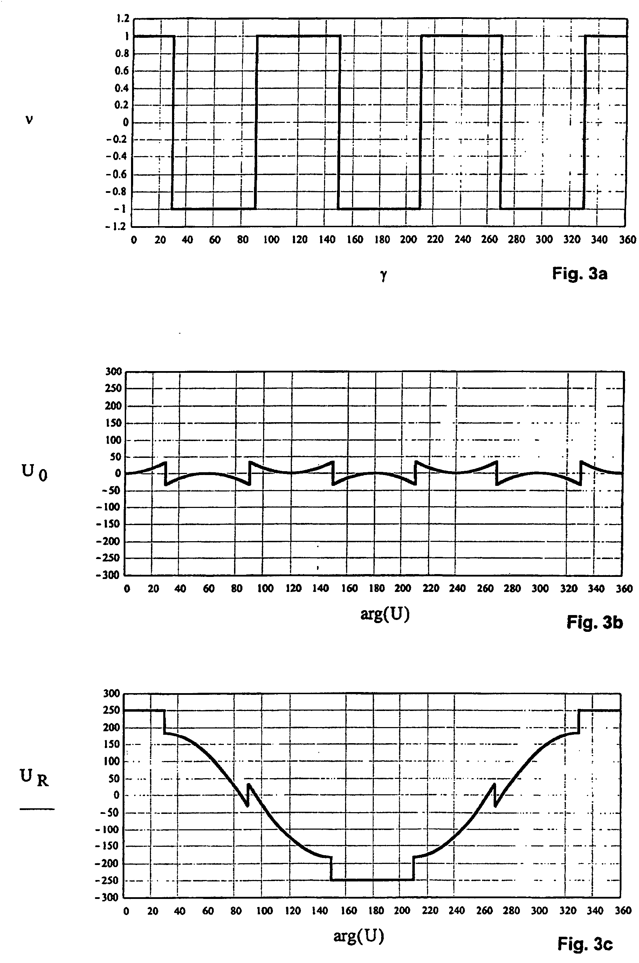

In der Figur 3a ist eine Sprünge aufweisende Wertetabelle des Funktionsspeichers 8 gezeigt, in der Figur 3b ist der zu Figur 3a gehörige Verlauf des Nullspannungssystems $(U_0, U_0, U_0)$gezeigt, wobei die Sollspannung einen großen Betrag hat. In der Figur 3c ist der daraus sich ergebende Spannungsverlauf der Phase R des resultierenden Spannungssystems gezeigt.

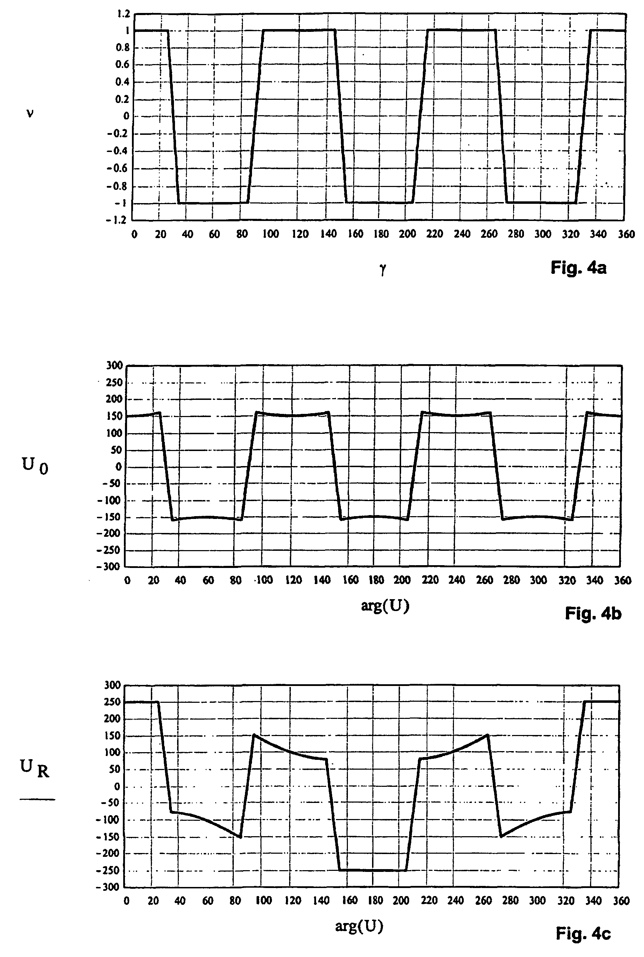

In der Figur 4a ist eine Wertetabelle des Funktionsspeichers 8 mit stetigem Funktionsverlauf gezeigt, in der Figur 4b ist der zu Figur 4a gehörige Verlauf des Nullspannungssystems $(U_0, U_0, U_0)$ gezeigt, wobei die Sollspannung einen kleinen Betrag hat. In der Figur 4c ist der daraus sich ergebende Spannungsverlauf der Phase R des resultierenden Spannungssystems gezeigt.

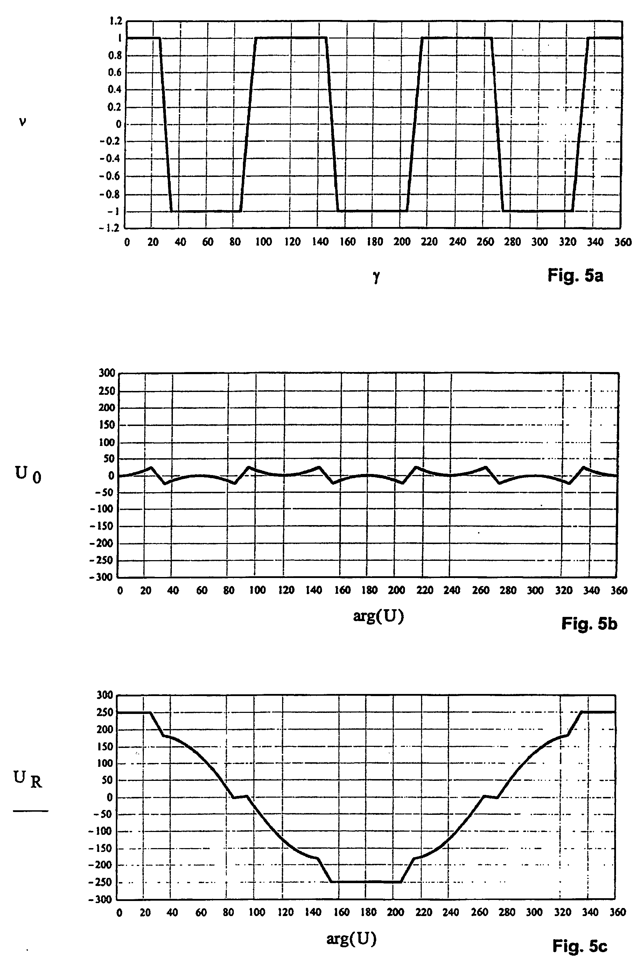

In der Figur 5a ist eine Wertetabelle des Funktionsspeichers 8 mit stetigem Funktionsverlauf gezeigt, in der Figur 5b ist der zu Figur 5a gehörige Verlauf des Nullspannungssystems $(U_0, U_0, U_0)$ gezeigt, wobei die Sollspannung einen großen Betrag hat. In der Figur 5c ist der daraus sich ergebende Spannungsverlauf der Phase R des resultierenden Spannungssystems gezeigt.

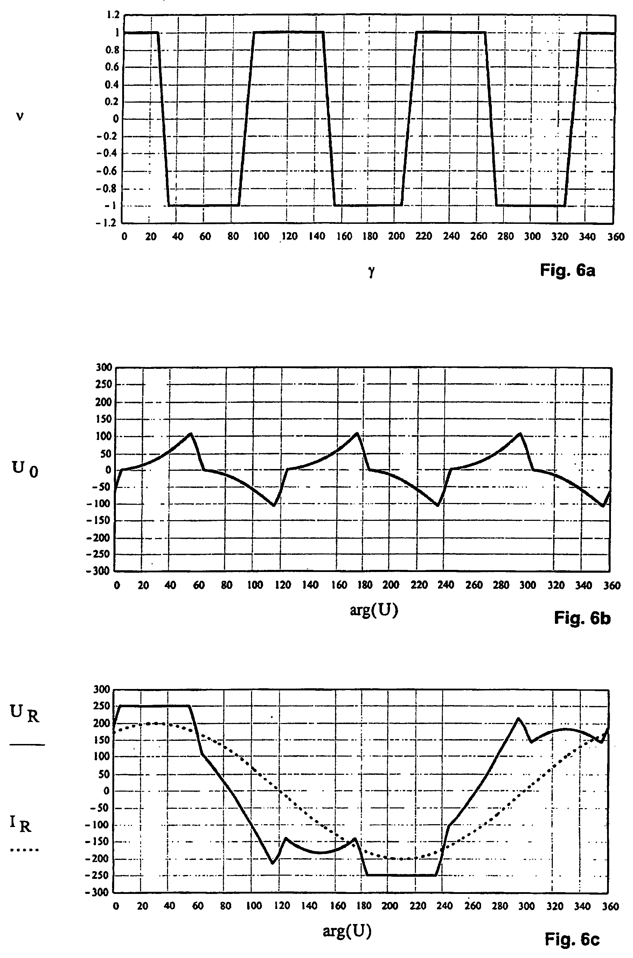

In der Figur 6a ist eine Wertetabelle des Funktionsspeichers 8 mit stetigem Funktionsverlauf gezeigt, in der Figur 6b ist der zu Figur 6a gehörige Verlauf des Nullspannungssystems $(U_0, U_0, U_0)$ gezeigt, wobei die Sollspannung einen großen Betrag hat und ein optimierter Steuerwinkel verwendet wird. In der Figur 6c ist der daraus sich ergebende Spannungsverlauf der Phase R des resultierenden Spannungssystems gezeigt.

In der Figur 1 ist der wesentliche Teil der Steuervorrichtung und/oder des Steuerverfahrens bei einem erfindungsgemäßen Ausführungsbeispiel skizziert. Der Funktionsgenerator 1 bildet aus dem Spannungsraumzeiger, der durch Betrag |U| und Winkel arg(U) beschrieben wird, mittels Funktionstabellen, die beispielhaft einen sinusförmigen Verlauf beinhalten, ein Soll-Spannungssystem $(U_{R,soll}, U_{S,soll}, U_{T,soll})$, auf das ein Nullspannungssystem $(U_0, U_0, U_0)$ aufsummiert wird. Das resultierende Spannungssystem $(U_R, U_S, U_T)$ wird einem Pulsweitenmodulator 2 zugeführt. Zur Generierung der Schaltsignale $(S_R, S_S, S_T)$ für die steuerbaren Leistungshalbleiterschalter des Umrichters wird hierzu die Dreieckspannung des Funktionsgenerators 5 von Komparatoren 6 mit dem resultierenden Spannungssystem $(U_R, U_S, U_T)$ verglichen.

Der Funktionsgenerator 1 bildet bei dem erfindungsgemäßen Ausführungsbeispiel beispielshaft das Soll-Spannungssystem gemäß $(U_{R,soll}, U_{S,soll}, U_{T,soll})$ = (|U|*cos (arg(U)), |U|*cos (arg(U)-120°), |U|*cos (arg(U) -240°)).

Der Pulsweitenmodulator 2 wird derart betrieben, daß bei positiver und negativer Vollaussteuerung einer Phase des resultierenden Spannungssystems $(U_R, U_S, U_T)$ keine Umschaltung des Schaltsignals innerhalb einer Modulationsperiode des Pulsweitenmodulators 2 stattfindet.

Das Nullspannungssystem $(U_0, U_0, U_0)$ wird vom Rechenwerk 7 aus dem Soll-Spannungssystem $(U_{R,soll}, U_{S,soll}, U_{T,soll})$ und der Steuergröße ν gebildet. Die Steuergröße ν ergibt sich als Ausgangswert des Funktionsspeichers 8, der als Eingangswert die Größe γ aufweist, die die

Summe aus dem Winkel des Spannungs-Raumzeigers und aus dem Steuerwinkel φ darstellt. Der Steuerwinkel φ wird von einer übergeordneten Regelung angeboten, die entweder spannungsgeführt oder stromgeregelt ausgeführt ist.

Im Funktionsspeichers 8 ist ein winkelabhängiger Funktionsverlauf mit einem Wertebereich abgelegt, dessen Werte einen Betrag kleiner oder gleich 1 aufweisen.

Das Rechenwerk 7 umfasst einen Minimalwertbildner 3 und einen Maximalwertbildner 4, die einen Minimalwert beziehungsweise einen Maximalwert aus dem Soll-Spannungssystem ($U_{R,soll}$, $U_{S,soll}$, $U_{T,soll}$) bilden. Die maximale Nullspannung wird aus der Differenz von $U_Z/2$ und dem gebildeten Maximalwert bestimmt. Ebenso wird die minimale Nullspannung wird aus der Differenz von $-U_Z/2$ und dem gebildeten Minimalwert bestimmt. Die maximale Nullspannung wird mit der um 1 vergrößerten Steuergröße $\nu$ multipliziert. Die minimale Nullspannung wird mit der um 1 verminderten Steuergröße $\nu$ multipliziert. Die Differenz der beiden Multiplikationsergebnisse ergibt nach Halbierung die Spannung $U_0$, aus dem das Nullspannungssystem ($U_0$, $U_0$, $U_0$) gebildet wird.

Besonders kennzeichnend sind die An- und Abstiegsflanken der im Funktionsspeicher 8 eingegebenen Funktion. Sie verlaufen nicht senkrecht, also mit unendlicher Steigung, wie bei einem Schalter oder dergleichen, sondern mit einer endlichen Steigung. Somit grenzen also die Winkelbereiche maximaler oder minimaler Nullspannungskomponente nicht unmittelbar aneinander an, sondern sind durch zusätzliche Winkelbereiche endlicher Steigung voneinander getrennt, in denen ein stetiger Übergang von minimaler Nullspannungskomponente auf maximale Nullspannungskomponente und umgekehrt stattfindet.

Da die genannten Winkelbereiche im Vergleich zu den Bereichen mit maximaler und minimaler Nullspannungskomponente klein gewählt werden können, ergeben sich nur geringe Einbußen bei der Einsparung von Schaltverlusten. Besonders vorteilhaft ist aber die erzielte Unterdrückung der Geräuschbildung, da die erwähnten Knackgeräusche im Wesentlichen vermieden werden.

In diesen Winkelbereichen kann die skalare Spannung $U_0$ des Nullspannungssystems ($U_0$, $U_0$, $U_0$) Werte zwischen $U_Z/2$ oder $-U_Z/2$ annehmen. Bei einer analogen Ausführung des Steuerverfahrens ist ein stetiger Übergang vorteilhaft. Je, flacher die ansteigenden und abfallenden Flanken desto geringer ist die Geräuschbildung. Nachteilig bei dem langsamerem Ansteigen oder Abfallen der Flanken ist hingegen, dass der für die Flattop-Winkelbereiche zur Verfügung stehende Winkelbereich sich vermindert.

Bei einem zeitdiskret arbeitenden System werden viele Größen, wie beispielsweise auch die Größe $\gamma$, für jeden Zeitschritt neu berechnet. Insbesondere ist die Winkeldifferenz zweier aufeinanderfolgender Zeitschritte des Wertes arg(U) bei größerer Drehzahl größer. Die Steuergröße $\nu$ verhält sich in entsprechender Weise. Bei einem erfindungsgemäßen Ausführungsbeispiel beträgt die Zykluszeit, also die Zeitdifferenz zweier aufeinander folgender Zeitschritte, 250µs. Bei einem Winkelbereich für Zwischenwerte von 10° und einer elektrischen Frequenz bis 111 Hz ist gewährleistet, daß beim Übergang von maximalem auf minimales Nullspannungssystem mindestens für einen Zeitschritt ein Wert zwischen $U_Z/2$ und $-U_Z/2$ angenommen wird. Bei kleineren elektrischen Frequenzen wird für mehr Zeitschritte ein Zwischenwert angenommen.

Besonders kennzeichnend bei der Geräuschbildung ist der Kennwert 'Spannungsänderung pro Zeit' des zeitlichen Verlaufs von $U_0$, da bei einer schnellen großen Spannungsänderung jeweils lautere Geräusche entstehen als bei einer langsamen kleinen Spannungsänderung pro Zeitschritt oder Zykluszeit des zeitdiskret arbeitenden Systems.

Bei sehr großen elektrischen Frequenzen wird üblicherweise die Eckdrehzahl und damit Spannungswerte nahe der Vollaussteuerung erreicht, weshalb in diesen Fällen die Spannungsänderung begrenzt ist, da sich dann maximales und minimales Nullspannungssystem nur geringfügig unterscheiden. Der Kennwert 'Spannungsänderung pro Zeit' bleibt dann ohnehin sehr klein. Zwischenwerte tragen dann nicht mehr wesentlich zur Reduzierung der Geräusche bei.

Bei einem erfindungsgemäßen Ausführungsbeispiel wird in der Funktionstabelle eine Ausdehnung von 10° für die Winkelbereiche mit Zwischenwerten gewählt. Dies stellt einen sehr guten Kompromiss zwischen Reduzierung der Schaltverluste und Geräuschentwicklung dar. Bei einem anderen erfindungsgemäßen Ausführungsbeispiel kann auch ein Winkelbereich von 3° bis 30° gewählt werden, wobei die Geräusche auch reduziert sind.

In einem besonders vorteilhaften Ausführungsbeispiel ist ein Wert für den Kennwert Spannungsänderung pro Zeit vorgebbar und wird zur Bestimmung des Verlaufs der Funktionstabelle verwendet.

Durch geeignete Wahl des Winkels $\varphi$ können die Flattop-Bereiche so verschoben werden, dass sie bezüglich der Ausgangsströme bestmöglich in der Nähe deren Maximums liegen, was die Effektivität bezüglich der Einsparung von Schaltverlusten steigert, insbesondere dann, wenn der Winkel fortwährend dem Betriebspunkt des Motors angepasst wird.

Dem Funktionsspeicher 8 ist ein Rechenwerk 7 nachgeschaltet, das die Spannung $U_0$ aus Momentanwerten des maximalen und minimalen Phasenpotentials, sowie der momentanen Zwischenkreisspannung $U_Z$ und dem Ausgangswert des Funktionsspeichers $\nu$ gemäß folgender Formel berechnet:

$$U_0 = \frac{1}{2}\left[(\nu+1)\cdot\left(\frac{U_Z}{2}-\mathrm{Max}\left(U_{R.soll}, U_{S.soll}, U_{T.soll}\right)\right) - (\nu-1)\cdot\left(\frac{-U_Z}{2}-\mathrm{Min}\left(U_{R.soll}, U_{S.soll}, U_{T.soll}\right)\right)\right]$$

.

Damit geht einher dass bei dem Wert $\nu = 1$, das maximale Nullspannungssystem ($U_{0,MAX}$, $U_{0,MAX}$, $U_{0,MAX}$) und dem Wert $\nu = -1$ das minimale Nullspannungssystem ($U_{0,MIN}$, $U_{0,MIN}$, $U_{0,MIN}$) auf das Soll-Spannungssystem

($U_{R,soll}$, $U_{S,soll}$, $U_{T,soll}$) addiert wird. Für Werte $\nu$ zwischen 1 und -1 nimmt die Nullspannung $U_0$ Werte zwischen $U_{0,MAX}$ und $U_{0,MIN}$ anteilig an. Das so gebildete Nullspannungssystem ($U_0$,$U_0$, $U_0$) wird auf das Soll-Spannungssystem ($U_{R,soll}$, $U_{S,soll}$, $U_{T,soll}$) addiert.

Bei weiteren erfindungsgemäßen Ausführungsbeispielen werden andere Formeln verwendet, die aber im Wesentlichen das gleiche Schaltverhalten zur Folge haben. Beispielsweise können alle in der obigen Formel verwendeten Werte gefiltert werden. Außerdem kann die Formel um Faktoren und/oder Summanden modifiziert werden, die bei einer diskreten Realisierung im Rahmen der Diskretisierung der Ausgangsgröße bleiben.

Ein weiterer Vorteil ist, dass bei dem erfindungsgemäßen Ausführungsbeispiel die bekannten Flattop-Verfahren sich als Sonderfälle ergeben, wenn entsprechende Funktionen im Funktionsspeicher 8 abgelegt werden. Wenn beispielsweise der Funktionsspeicher 8 für alle Werte von $\gamma$ den Wert $\nu = 0$ enthält, ergibt sich ein Steuerverfahren mit voller Spannungsausnutzung, das aber keine Flattops aufweist. Für die Wahl $\nu = -1$ oder $\nu = +1$ für alle Werte von $\gamma$ ergibt sich ein 120°Flattop-Verfahren.

In der Figur 2a ist eine Wertetabelle des Funktionsspeichers 8 mit sprunghaften Übergängen gezeigt, die einem schaltenden Verhalten entsprechen. Diese wird im Funktionsspeicher 8 hinterlegt und der Winkel $\varphi$ zu Null vorgegeben. Somit ergibt sich ein 60°-Flattop-Verfahren, bei welchem die Flattop-Winkelbereiche jeweils symmetrisch um ein Maximum oder ein Minimum einer Phase des Sollspannungssystems angeordnet sind. In der Figur 2b ist der zugehörige Verlauf der Spannung $U_0$ gezeigt, wobei der Betrag des Spannungsraumzeigers |U| = 100V, die Zwischenkreisspannung $U_Z$=500V und der Steuerwinkel $\varphi$=0° gewählt ist. In der Figur 2c ist der zugehörige Spannungsverlauf der Phase R des resultierenden Spannungssystems gezeigt. Der Modulationsgrad m wird aus dem Quotienten aus der Länge und der maximal möglichen Länge des modulierenden Spannungszeigers für ein sinusförmig moduliertes Drehspannungssystem gebildet und ist bei dem beschriebenen Ausführungsbeispiel m=0,35.

In den Figuren 3a, 3b, 3c sind dieselben entsprechenden Größen dargestellt wie bei den Figuren 2a, 2b, 2c, jedoch mit |U| = 250V. Daher zeigen auch alle Verläufe wiederum sprunghafte Übergänge oder Sprungstellen, die wiederum zur Erhöhung der Geräuschbildung beitragen ebenso wie bei des Figuren 2a, 2b, 2c. Der Modulationsgrad beträgt m = 0.87.

In der Figur 4a ist eine Wertetabelle des Funktionsspeichers 8 mit stetigen Übergängen gezeigt, die sich über jeweils 10° ausdehnen. Die Tabelle weist also auch eine nicht vemachlässigbare Menge von Zwischenwerten zwischen -1 und 1 auf. Je nach Drehzahl und je nach Zykluszeit bei einer zeitdiskreten Ausführung wird eine verschieden große Anzahl dieser Zwischenwerte verwendet. In der Figur 4b ist der zugehörige Verlauf der Spannung $U_0$ des Nullspannungssystems gezeigt, wobei |U| = 100V, $U_Z$= 500V und $\varphi$ = 0° gewählt ist. Der Modulationsgrad beträgt m = 0,35. In der Figur 4c ist wiederum der zu Figur 4a gehörige Spannungsverlauf der Phase R des resultierenden Spannungssystems gezeigt. Alle Verläufe der Figuren 4a, 4b, 4c weisen keine sprunghaften, sondern stetige Übergänge auf. In jedem Fall ist die Spannungsänderung pro Zeit unterhalb eines endlichen Grenzwertes und somit beschränkt. Die Geräuschbildung ist somit unterdrückt oder zumindest reduziert.

In den Figuren 5a, 5b, 5c sind dieselben entsprechenden Größen dargestellt wie bei den Figuren 4a, 4b, 4c, jedoch mit |U| = 250V. Wiederum zeigen alle Verläufe stetige Übergänge und bewirken somit ebenso eine Reduzierung der Geräuschbildung. Der Modulationsgrad beträgt m = 0,87.

In der Figur 6a ist wiederum eine Wertetabelle des Funktionsspeichers 8 mit stetigen Übergängen gezeigt, die sich über jeweils 10° ausdehnen. In der Figur 6b ist der zugehörige Verlauf der Spannung $U_0$ gezeigt, wobei |U| = 250V, $U_Z$= 500V und $\varphi$ = - 30° ist. Weiterhin ist in Figur 6c der Verlauf der Spannung $U_R$ der Phase R, sowie ein beispielhaft angenommener Verlauf des Stroms $I_R$ der Phase R gezeigt, der einen Phasenverschiebungswinkel von 30° gegenüber der Spannung $U_R$ aufweist. Der Steuerwinkel ist mit $\varphi$ = - 30° derart bestimmt, dass die Flattop-Winkelbereiche möglichst im Bereich der Maxima oder Minima des Stroms liegen. Dies ist deshalb günstig, weil die Schaltverluste der elektronischen Leistungshalbleiterschalter mit zunehmendem Strom anwachsen und im Flattop-Winkelbereich nicht geschaltet wird. Je mehr also die Flattop-Winkelbereiche im Bereich betragsmäßig großer Ströme liegen, desto größer ist auch die Reduzierung der Schaltverluste. Der Modulationsgrad beträgt m = 0,87. In der Figur 6c ist der zu Figur 6a gehörige Spannungsverlauf der Phase R des resultierenden Spannungssystems, die Lage der beschriebenen Flattop-Winkelbereiche und der Verlauf des Stroms der entsprechenden Phase R gezeigt.

Die Erfindung vereinigt also die Vorteile reduzierter Schaltverluste mit reduzierter Geräuschbildung.

Bei weiteren erfindungsgemäßen Ausführungsbeispielen werden auch andere Umrichter, wie beispielsweise Multi-Level-Umrichter, eingesetzt.

## Patentansprüche

**1.** Steuerverfahren für einen pulsweitengesteuerten Umrichter mit steuerbaren Leistungshalbleiterschaltern zur Reduzierung von Schaltverlusten unter Vermeidung von Geräuschbildung,
wobei aus einem Spannungsraumzeiger, umfassend Betrag |U| und Winkel arg(U), ein Soll-Spannungssystem

($U_{R,soll}$, $U_{S,soll}$, $U_{T,soll}$) gebildet wird,
und wobei ein Nullspannungssystem ($U_0$, $U_0$, $U_0$) aus dem Soll-Spannungssystem ($U_{R,soll}$, $U_{S,soll}$, $U_{T,soll}$), dem Winkel arg(U) und einem Steuerwinkel $\varphi$ gebildet wird,
und wobei das aus der Summe von Nullspannungssystem ($U_0$, $U_0$, $U_0$) und Soll-Spannungssystem ($U_{R,soll}$, $U_{S,soll}$, $U_{T,soll}$) resultierende Spannungssystem ($U_R$, $U_S$, $U_T$) einem Pulsweitenmodulator 2 zur Bildung der Steuersignale ($S_R$, $S_S$, $S_T$) für die Leistungshalbleiterschalter des Umrichters zugeführt wird,
wobei der 360°-Winkelbereich des Sollspannungszeigers ($U_{R,soll}$, $U_{S,soll}$, $U_{T,soll}$) zusammengesetzt wird aus

- ■ ersten Winkelbereichen, bei denen ein maximales Nullspannungssystem ($U_{0,MAX}$, $U_{0,MAX}$, $U_{0,MAX}$) aufsummiert wird,
- ■ zweiten Winkelbereichen, bei denen ein minimales Nullspannungssystem ($U_{0,MIN}$, $U_{0,MIN}$, $U_{0,MIN}$) aufsummiert wird und
- ■ dritten Winkelbereichen, bei denen ein zwischen minimalem und maximalem Nullspannungssystem liegendes Nullspannungssystem aufsummiert wird,

und wobei die ersten und die zweiten stets nur dritte Winkelbereiche zum Nachbarn haben.

**2.** Steuerverfahren nach Anspruch 1,
**dadurch gekennzeichnet, dass**
die dritten Winkelbereiche einen quasistetigen Übergang von minimalem zum maximalem Nullspannungssystem und/oder umgekehrt darstellen.

**3.** Steuerverfahren nach einem der Ansprüche 1 bis 2,
**dadurch gekennzeichnet, dass**
die Spannung $U_0$ des Nullspannungssystems ($U_0$, $U_0$, $U_0$) in den dritten Winkelbereichen diskrete Werte annimmt.

**4.** Steuerverfahren nach Anspruch 3,
**dadurch gekennzeichnet, dass**
zumindest die maximale Differenz zweier zeitlich aufeinander folgenden Werte als Kennwert vorgebbar ist.

**5.** Steuerverfahren nach mindestens einem der vorangegangenen Ansprüche,
**dadurch gekennzeichnet, dass**
die dritten Winkelbereiche jeweils sich über mindestens 3° und/oder maximal 30° ausdehnen,
**und/oder dass**
die dritten Winkelbereiche jeweils sich über 10° ausdehnen,
**und/oder dass**
der Steuerwinkel $\varphi$ von einer übergeordneten, strom- oder spannungsgeführten Steuerung vorgegeben wird,
**und/oder dass**
der Steuerwinkel $\varphi$ konstant vorgegeben wird,
**und/oder dass**
der Steuerwinkel $\varphi$ eine Funktion des Winkels zwischen Strom-Raumzeiger und Spannungs-Raumzeiger ist,
**und/oder dass**
der Steuerwinkel $\varphi$ auf einen Winkelbereich begrenzt wird,
**und/oder dass**
der Winkelbereich sich über 60° erstreckt,
**und/oder dass**
ein Funktionsspeicher 8 aus der Summe von Steuerwinkel $\varphi$ und von arg(U) eine Steuergröße $\nu$ zur Beeinflussung des Nullspannungssystem ($U_0$, $U_0$, $U_0$) bildet unter Verwendung einer Funktion und/oder Funktionstabelle,
**und/oder dass**
die Funktion und/oder Funktionstabelle

- ■ erste Winkelbereiche, bei denen ein maximales Nullspannungssystem ($U_{0,MAX}$, $U_{0,MAX}$, $U_{0,MAX}$) aufsummiert wird,
- ■ zweite Winkelbereiche, bei denen ein minimales Nullspannungssystem ($U_{0,MIN}$, $U_{0,MIN}$, $U_{0,MIN}$) aufsummiert wird und
- ■ dritte Winkelbereiche, bei denen ein zwischen minimalem und maximalem Nullspannungssystem liegendes Nullspannungssystem aufsummiert wird,

aufweist

und dass die ersten und die zweiten stets nur dritte Winkelbereiche zum Nachbarn haben,

**und/oder dass**

im Rechenwerk 7 die Spannung $U_0$ zur Bildung des Nullspannungssystems nach der Formel

$$U_0 = \frac{1}{2}\left[(v+1)\cdot\left(\frac{U_z}{2} - \text{Max}\left(U_{R.soll}, U_{S.soll}, U_{T.soll}\right)\right) - (v-1)\cdot\left(\frac{-U_z}{2} - \text{Min}\left(U_{R.soll}, U_{S.soll}, U_{T.soll}\right)\right)\right]$$

bestimmt wird, wobei $U_z$ die Zwischenkreisspannung des Umrichters darstellt.

**6.** Steuervorrichtung zur Durchführung eines Steuerverfahrens nach mindestens einem der vorangegangenen Ansprüche,

wobei die Steuervorrichtung von einem pulsweitengesteuerten Umrichter mit steuerbaren Leistungshalbleiterschaltem umfasst wird,

wobei ein Funktionsgenerator 1 aus einem Spannungsraumzeiger, umfassend Betrag |U| und Winkel arg(U), ein Soll-Spannungssystem ($U_{R,soll}$, $U_{S,soll}$, $U_{T,soll}$) bildet,

und wobei ein Rechenwerk 7 zusammen mit einem Funktionsspeicher 8 ein Nullspannungssystem ($U_0$, $U_0$, $U_0$) aus dem Soll-Spannungssystem ($U_{R,soll}$, $U_{S,soll}$, $U_{T,soll}$), dem Winkel arg(U) und einem Steuerwinkel $\varphi$ bildet,

und wobei ein Pulsweitenmodulator 2 aus der Summe von Nullspannungssystem ($U_0$, $U_0$, $U_0$) und Soll-Spannungssystem ($U_{R,soll}$, $U_{S,soll}$, $U_{T,soll}$) Schaltsignale für Leistungshalbleiterschalter bildet.

**7.** Steuervorrichtung nach Anspruch 6,

**dadurch gekennzeichnet, dass**

der Umrichter Mittel zum Vorgeben des Steuerwinkels $\varphi$ aufweist.

**8.** Steuervorrichtung nach Anspruch 7,

**dadurch gekennzeichnet, dass**

die Mittel durch eine übergeordnete, strom- oder spannungsgeführte Steuerung realisiert sind und/oder dass die Mittel zum Vorgeben des Steuerwinkels $\varphi$ Eingabemittel sind.

**9.** Steuervorrichtung nach mindestens einem der vorangegangenen Ansprüche,

**dadurch gekennzeichnet, dass**

das Rechenwerk mindestens einen Minimalwertbildner 3 und mindestens einen Maximalwertbildner 4 aufweist.

**10.** Steuervorrichtung nach mindestens einem der vorangegangenen Ansprüche,

**dadurch gekennzeichnet, dass**

der Ausgangswert des Funktionsspeichers 8 im Rechenwerk 7 einem ersten und einem zweiten Addierer zugeführt wird

**und/oder dass**

die Addierer derart gestaltet sind, dass

zur Bildung des Ausgangswerts des ersten Addierers auf den Ausgangswert des Funktionsspeichers 8 ein positiver Wert, wie 1 oder dergleichen, addiert wird und dass

zur Bildung des Ausgangswerts des zweiten Addierers auf den Ausgangswert des Funktionsspeichers ein negativer Wert, wie -1 oder dergleichen, addiert wird und dass

der Ausgangswert des ersten Addiererers mit der Differenz von $U_Z/2$ und Ausgangswert des Maximalwertbildners unter Verwendung eines ersten Multiplizierers multipliziert wird,

der Ausgangswert des zweiten Addiererers mit der Differenz von $-U_Z/2$ und Ausgangswert des Minimalwertbildners unter Verwendung eines zweiten Multiplizierers multipliziert wird,

und dass die Ausgangswerte der Multiplizierer einem Subtrahierer zur Differenzbildung zugeführt werden und diese Differenz einem Multiplizierer oder einem Proportionalglied zur Bildung der Spannung $U_0$ zugeführt wird.

## Claims

**1.** A control method for a pulse-width-controlled inverter with controllable power semiconductor switches to reduce switching losses whilst avoiding the generation of noise,

wherein a nominal-voltage system $(U_{R,soll}, U_{S,soll}, U_{T,soll})$ is formed from a voltage space indicator comprising an amount $|U|$ and an angle **arg(U)**,

and wherein a zero-voltage system $(U_0, U_0, U_0)$ is formed from the nominal-voltage system $(U_{R,soll}, U_{S,soll}, U_{T,soll})$, the angle **arg(U)** and a control angle $\varphi$,

and wherein the voltage system $(U_R, U_S, U_T)$ resulting from the sum of the zero-voltage system $(U_0, U_0, D_0)$ and the nominal-voltage system $(U_{R,soll}, U_{S,soll}, U_{T,soll})$ is supplied to a pulse-width modulator 2 in order to form the control signals $(S_R, S_S, S_T)$ for the power semiconductor switches of the inverter,

wherein the 360° angular range of the nominal-voltage indicator $(U_{R,soll}, U_{S,soll}, U_{T,soll})$ is formed from

- ■ first angular ranges in which a maximum zero-voltage system $(U_{0,MAX}, U_{0,MAX}, U_{0,MAX})$ is added up,
- ■ second angular ranges in which a minimum zero-voltage system $(U_{0,MIN}, U_{0,MIN}, U_{0,MIN})$ is added up, and
- ■ third angular ranges in which a zero-voltage system lying between a minimum zero-voltage system and a maximum zero-voltage system is added up,

and wherein the first and the second angular ranges always have only the third angular ranges adjacent to them.

**2.** A control method according to Claim 1,
**characterized in that**
the third angular ranges represent a quasi-continuous transition from a minimum to the maximum zero-voltage system and/or *vice versa*.

**3.** A control method according to one of Claims 1 to 2,
**characterized in that**
the voltage $U_0$ of the zero-voltage system $(U_0, U_0, U_0)$ assumes discrete values in the third angular ranges.

**4.** A control method according to Claim 3,
**characterized in that**
at least the maximum difference of two values following in succession in time is presettable as a characteristic value.

**5.** A control method according to at least one of the preceding Claims,
**characterized in that**
the third angular ranges extend in each case over at least 3° and/or a maximum of 30°,
**and/or that**
the third angular ranges extend in each case over 10°,
**and/or that**
the control angle $\varphi$ is pre-set by a superordinated current- or voltage-guided control,
**and/or that**
the control angle $\varphi$ is pre-set to be constant,
**and/or that**
the control angle $\varphi$ is a function of the angle between a current space indicator and a voltage space indicator,
**and/or that**
the control angle $\varphi$ is limited to an angular range,
**and/or that**
the angular range extends over 60°,
**and/or that**
a function memory 8 forms a control value $\nu$ from the sum of the control angle $\varphi$ and of **arg(U)** in order to influence the zero-voltage system $(U_0, U_0, U_0)$ whilst using a function and/or a function table,
**and/or that**
the function and/or the function table has

- ■ first angular ranges in which a maximum zero-voltage system $(U_{0,MAX}, U_{0,MAX}, U_{0,MAX})$ is added up,
- ■ second angular ranges in which a minimum zero-voltage system $(U_{0,MIN}, U_{0,MIN}, U_{0,MIN})$ is added up, and
- ■ third angular ranges in which a zero-voltage system lying between a minimum zero-voltage system and a maximum zero-voltage system is added up,

and the first and the second angular ranges always have only the third angular ranges adjacent to them,
**and/or that**

the voltage $\mathbf{U_0}$ for forming the zero-voltage system is determined in the arithmetic logic unit 7 in accordance with the formula

$$U_0 = \frac{1}{2} \cdot \left[ (\nu + 1) \cdot \left( \frac{U_z}{2} - \mathrm{Max}(U_{R,\mathrm{soll}}, U_{S,\mathrm{soll}}, U_{T,\mathrm{soll}}) \right) - (\nu - 1) \cdot \left( \frac{-U_z}{2} - \mathrm{Min}(U_{R,\mathrm{soll}}, U_{S,\mathrm{soll}}, U_{T,\mathrm{soll}}) \right) \right]$$

in which $U_Z$ represents the intermediate-circuit voltage of the inverter.

6. A control device for performing a control method according to at least one of the preceding Claims,
   wherein the control device is embraced by a pulse-width-controlled inverter with controllable power semiconductor switches,
   wherein a function generator 1 forms a nominal-voltage system $(\mathbf{U_{R,soll}}, \mathbf{U_{S,soll}}, \mathbf{U_{T,soll}})$ from a voltage space indicator comprising an amount $|\mathbf{U}|$ and an angle $\mathbf{arg(U)}$,
   and wherein an arithmetic logic unit 7 together with a function memory 8 forms a zero-voltage system $(\mathbf{U_0}, \mathbf{U_0}, \mathbf{U_0})$ from the nominal-voltage system $(\mathbf{U_{R,soll}}, \mathbf{U_{S,soll}}, \mathbf{U_{T,soll}})$, the angle $\mathbf{arg(U)}$ and a control angle $\varphi$,
   and wherein a pulse-width modulator 2 forms switching signals for power semiconductor switches from the sum of the zero-voltage system $(\mathbf{U_0}, \mathbf{U_0}, \mathbf{U_0})$ and the nominal-voltage system $(\mathbf{U_{R,soll}}, \mathbf{U_{S,soll}}, \mathbf{U_{T,soll}})$.

7. A control device according to Claim 6,
   **characterized in that**
   the inverter comprises means for pre-setting the control angle $\varphi$.

8. A control device according to Claim 7,
   **characterized in that**
   the means are formed by a superordinated current- or voltage-guided control and/or the means for pre-setting the control angle $\varphi$ are input means.

9. A control device according to at least one of the preceding Claims,
   **characterized in that**
   the arithmetic logic unit comprises at least one minimum-value former 3 and at least one maximum-value former 4.

10. A control device according to at least one of the preceding Claims,
    **characterized in that**
    the output value of the function memory 8 in the arithmetic logic unit 7 is supplied to a first and a second adder
    and/or that
    the adders are designed in such a way that
    in order to form the output value of the first adder, a positive value such as 1 or the like, is added to the output value of the function memory 8, and in order to form the output value of the second adder, a negative value such as -1 or the like, is added to the output value of the function memory, and
    the output value of the first adder is multiplied with the difference of $\mathbf{U_z/2}$ and the output value of the maximum-value former whilst using a first multiplier,
    the output value of the second adder is multiplied with the difference of $\mathbf{-U_z/2}$ and the output value of the minimum-value former whilst using a second multiplier,
    and the output values of the multipliers are supplied to a subtractor in order to form a difference and this difference is supplied to a multiplier or a proportional member in order to form the voltage $\mathbf{U_0}$.

**Revendications**

1. Procédé de commande pour un convertisseur ou mutateur commandé par largeur d'impulsion avec des commutateurs à semi-conducteurs de puissance commandables pour la réduction des pertes de commutation en évitant la production de bruit,
   dans lequel on forme à partir d'un vecteur spatial de tension de norme $|U|$ et d'angle $arg(U)$ un système de tensions nominales $(U_{R,soll}, U_{S,soll}, U_{T,soll})$,
   et dans lequel on forme un système de tensions nulles $(U_0, U_0, U_0)$ à partir du système de tensions nominales $(U_{R,soll}, U_{S,soll}, U_{T,soll})$, de l'angle $arg(U)$ et d'un angle de commande $\varphi$,

et dans lequel le système de tensions résultant ($U_R$, $U_S$, $U_T$) de la somme du système de tensions nulles ($U_0$, $U_0$, $U_0$) et du système de tensions nominales ($U_{R,soll}$, $U_{S,soll}$, $U_{T,soll}$) est fourni à un modulateur de largeur d'impulsion 2 pour former les signaux de commande ($S_R$, $S_S$, $S_T$) pour les commutateurs à semi-conducteurs de puissance du convertisseur,

dans lequel la plage angulaire de 360° du vecteur de tensions nominales ($U_{R,soll}$, $U_{S,soll}$, $U_{T,soll}$) se compose

- ■ de premières plages angulaires dans lesquelles on totalise ou additionne un système de tensions nulles maximal ($U_{0,MAX}$, $U_{0,MAX}$, $U_{0,MAX}$),
- ■ de deuxièmes plages angulaires dans lesquelles on totalise ou additionne un système de tensions nulles minimal ($U_{0,MIN}$, $U_{0,MIN}$, $U_{0,MIN}$) et
- ■ de troisièmes plages angulaires dans lesquelles on totalise ou additionne un système de tensions nulles situé entre un système de tensions nulles minimal et un système de tensions nulles maximal,

et dans lequel les premières et deuxièmes plages angulaires n'ont toujours pour voisines que des troisièmes plages angulaires.

2. Procédé de commande selon la revendication 1,
**caractérisé par le fait que**
les troisièmes plages angulaires représentent une transition quasi continue du système de tensions nulles minimal au système de tensions nulles maximal et/ou inversement.

3. Procédé de commande selon l'une des revendications 1 à 2,
**caractérisé par le fait que**
la tension $U_0$ du système de tensions nulles ($U_0$, $U_0$, $U_0$) prend des valeurs discrètes dans les troisièmes plages angulaires.

4. Procédé de commande selon la revendication 3,
**caractérisé par le fait que**
au moins la différence maximale entre deux valeurs successives dans le temps peut être définie en tant que valeur caractéristique.

5. Procédé de commande selon au moins une des revendications précédentes,
**caractérisé par le fait que**
les troisièmes plages angulaires s'étendent chacune sur au moins 3° et/ou au plus 30°,
**et/ou que**
les troisièmes plages angulaires s'étendent chacune sur 10°,
**et/ou que**
l'angle de commande φ est défini par une commande maître, commandée par courant ou par tension,
**et/ou que**
l'angle de commande φ est fixé à une valeur constante,
et/ou que
l'angle de commande φ est une fonction de l'angle entre le vecteur spatial courant et le vecteur spatial tension,
**et/ou que**
l'angle de commande φ est limité à une plage angulaire,
**et/ou que**
la plage angulaire s'étend sur 60°,
**et/ou que**
une mémoire de fonctions 8 forme à partir de la somme de l'angle de commande φ et de arg(U), en utilisant une fonction et/ou une table de fonctions, une grandeur de commande ν pour influencer le système de tensions nulles ($U_0$, $U_0$, $U_0$),
et/ou que
la fonction et/ou la table de fonctions présente

- ■ des premières plages angulaires dans lesquelles on totalise ou additionne un système de tensions nulles maximal ($U_{0,MAX}$, $U_{0,MAX}$, $U_{0,MAX}$),
- ■ des deuxièmes plages angulaires dans lesquelles on totalise ou additionne un système de tensions nulles minimal ($U_{0,MIN}$, $U_{0,MIN}$, $U_{0,MIN}$) et
- ■ des troisièmes plages angulaires dans lesquelles on totalise ou additionne un système de tensions nulles situé entre un système de tensions nulles minimal et un système de tensions nulles maximal,

et que les premières et deuxièmes plages angulaires n'ont toujours pour voisines que des troisièmes plages angulaires,

**et/ou que**

dans l'unité de calcul 7, la tension Uo utilisée pour la formation du système de tensions nulles est déterminée selon la formule

$$U_0 = \frac{1}{2}\left[ (\nu + 1)\cdot\left( \frac{U_z}{2} - \max\left( U_{R,soll}, U_{S,soll}, U_{T,soll} \right)\right) - (\nu - 1)\cdot\left( \frac{-U_z}{2} - \min\left( U_{R,soll}, U_{S,soll}, U_{T,soll} \right)\right)\right]$$

dans laquelle $U_z$ représente la tension de circuit intermédiaire du convertisseur ou mutateur.

6. Dispositif de commande pour la réalisation d'un procédé de commande selon au moins une des revendications précédentes,
   dans lequel le dispositif de commande comprend un convertisseur ou mutateur commandé par largeur d'impulsion avec des commutateurs à semi-conducteurs de puissance commandables,
   dans lequel un générateur de fonctions 1 forme à partir d'un vecteur spatial de tension de norme |U| et d'angle arg(U) un système de tensions nominales ($U_{R,soll}$, $U_{S,soll}$, $U_{T,soll}$),
   et dans lequel une unité de calcul 7 forme conjointement avec une mémoire de fonctions 8 un système de tensions nulles ($U_0$, $U_0$, $U_0$) à partir du système de tensions nominales ($U_{R,soll}$, $U_{S,soll}$, $U_{T,soll}$), de l'angle arg(U) et d'un angle de commande $\varphi$,
   et dans lequel un modulateur de largeur d'impulsion 2 forme à partir de la somme du système de tensions nulles ($U_0$, $U_0$, $U_0$) et du système de tensions nominales ($U_{R,soll}$, $U_{S,soll}$, $U_{T,soll}$) des signaux de commande pour des commutateurs à semi-conducteurs de puissance.

7. Procédé de commande selon la revendication 6,
   **caractérisé par le fait que**
   le convertisseur présente des moyens pour définir l'angle de commande $\varphi$.

8. Procédé de commande selon la revendication 7,
   **caractérisé par le fait que**
   les moyens sont réalisés par une commande maître commandée par courant ou par tension et/ou que les moyens pour définir l'angle de commande $\varphi$ sont des moyens d'entrée.

9. Procédé de commande selon au moins une des revendications précédentes,
   **caractérisé par le fait que**
   l'unité de calcul présente au moins un dispositif de formation de valeur minimale 3 et au moins un dispositif de formation de valeur maximale 4.

10. Procédé de commande selon au moins une des revendications précédentes,
    **caractérisé par le fait que**
    la valeur de sortie de la mémoire de fonctions 8 dans l'unité de calcul 1 est fournie à un premier et à un deuxième additionneur
    **et/ou que**
    les additionneurs sont conçus de telle manière que
    pour former la valeur de sortie du premier additionneur, on additionne à la valeur de sortie de la mémoire de fonctions 8 une valeur positive, telle que 1 ou analogue, et que pour former la valeur de sortie du deuxième additionneur, on additionne à la valeur de sortie de la mémoire de fonctions une valeur négative, telle que -1 ou analogue, et que
    la valeur de sortie du premier additionneur est multipliée par la différence de $U_z/2$ et la valeur de sortie du dispositif de formation de valeur maximale en utilisant un premier multiplicateur, la valeur de sortie du deuxième additionneur est multipliée par la différence de $-U_z/2$ et la valeur de sortie du dispositif de formation de valeur minimale en utilisant un deuxième multiplicateur,
    et que les valeurs de sortie des multiplicateurs sont fournies à un soustracteur pour former la différence et que cette différence est fournie à un multiplicateur ou à un élément à action proportionnelle pour former la tension Uo.

Fig. 1

Fig. 2a

arg(U)

Fig. 2b

arg(U)

Fig. 2c

15

Fig. 3a

Fig. 3b

Fig. 3c

16

ν

γ

**Fig. 4a**

$U_0$

arg(U)

**Fig. 4b**

$\underline{U_R}$

arg(U)

**Fig. 4c**

ν

**Fig. 5a**

U 0

arg(U)

**Fig. 5b**

U R
———

arg(U)

**Fig. 5c**

Fig. 6a

arg(U)

Fig. 6b

arg(U)

Fig. 6c